# EUROPEAN PATENT SPECIFICATION

(11) **EP 4 018 827 B1**
(45) Date of publication and mention of the grant of the patent: **18.06.2025**
(21) Application number: 21217118.5
(22) Date of filing: 22.12.2021
(51) Int. Cl.: A01N 1/146

(54) **ORGAN CONTAINER**
ORGANBEHÄLTER
RÉCIPIENT D'ORGANE

(30) Priority: 24.12.2020 JP 2020214523
(43) Date of publication of application: 29.06.2022
(73) Proprietor: SCREEN Holdings Co., Ltd., Kyoto-shi, Kyoto 602-8585 (JP)
(72) Inventor: TORAI, Shinji, KYOTO-SHI, Kyoto 602-8585 (JP); YOSHIMOTO, Syuhei, KYOTO-SHI, Kyoto 602-8585 (JP); KURAUCHI, Kanta, KYOTO-SHI, Kyoto 602-8585 (JP); ENOMOTO, Yuto, KYOTO-SHI, Kyoto 602-8585 (JP)
(74) Representative: Kilian Kilian & Partner mbB

(56) References cited:
- EP-A1- 3 718 402
- WO-A1-2019/143887
- WO-A1-2020/059413
- CN-A- 107 969 419
- CN-U- 207 707 149

## Description

### BACKGROUND OF THE INVENTION

### Field of the Invention

The present invention relates to an organ container for storing an organ. Description of the Background Art

In organ transplant operations, an organ removed from a donor is preserved under cooled conditions. This is because, if the organ is left at ordinary temperatures and the blood flowing from and to the organ is stopped, i.e., if the organ has got into a so-called warm ischemic state, the organ becomes easy to deteriorate due to metabolism in the organ, and the risk of occurrence of postoperative disorders will increase. Specifically, the temperature of the organ is kept low through procedures such as pouring a low-temperature preservation solution into the isolated organ or directly spraying ice-slush saline around the organ. This suppresses organ metabolism.

However, in the transplantation of an organ into a recipient, the organ is placed in the body cavity of the recipient and undergoes procedures such as vascular anastomosis. At this time, the organ cannot be kept under cooled conditions, so that the temperature of the organ rises due to the body temperature of the recipient or the outside air temperature and the organ gradually gets into a warm ischemic state. Hence, a surgeon who is carrying out the transplant operation has to perform procedures such as vascular anastomosis within a period of time as short as possible or to keep the organ to be transplanted under low-temperature conditions through, for example, pouring ice or other materials into the abdominal cavity. In the latter case, not only the organ but also the surgeon's fingertips will be cooled at the same time, and this becomes disadvantageous for vascular anastomosis that requires high precision.

In view of this, the inventors of the present application have proposed a technique disclosed in Japanese Patent Application Laid-Open No. 2018-000309, in which in the transplantation of an organ into a recipient, a sheet having a thermal insulating function is inserted between the recipient and the organ so as to suppress a temperature rise in the organ. The sheet according to Japanese Patent Application Laid-Open No. 2018-000309 includes an insulating layer and two waterproofing layers that are face-bonded to the opposite sides of the insulating layer.

However, the sheet according to Japanese Patent Application Laid-Open No. 2018-000309 does not completely cover the organ. Thus, portions of the surface of the organ that are not covered with the sheet may become deteriorated due to a temperature rise or may become damaged due to the application of some sort of impacts to the organ. WO 2020/059413 A1 discloses an organ container according to the preamble of claim 1. A further prior art document is EP 3 718 402 A1.

### SUMMARY OF THE INVENTION

It is an object of the present invention to provide an organ container that suppresses a temperature rise in an organ, reduces damage to the organ caused by the application of some sort of impacts to the organ, and further facilitates the surgeon's handling of the organ container during the transplantation of the organ into a recipient. This object is achieved by the subject-matter of claim 1. Preferred embodiments are subject-matters of the dependent claims. The invention is as defined in claim 1, wherein aspects of the invention are set out below.

A first aspect of the present application is an organ container for storing an organ. The organ container includes a pouch-shaped body having an opening and capable of storing an organ that is inserted from the opening into an inner space. The body is formed of a styrene elastomer and has an inner surface and an outer surface, each having an uneven shape.

According to the first aspect of the present application, the use of the organ container including the pouch-shaped body formed of a styrene elastomer to store an organ suppresses a temperature rise in the organ caused by the body temperature of a recipient or the outside air temperature and reduces damage to the organ caused by the application of some sort of impacts to the organ. Besides, the uneven shape of the inner surface of the body allows a low-temperature preservation solution to be held in the interstices between the organ and the inner surface of the body and thereby improves insulation effectiveness of the organ. Moreover, the uneven shape of the outer surface of the body facilitates the surgeon's handling of the organ container and improves workability during operation or during transport of the organ container.

### BRIEF DESCRIPTION OF THE DRAWINGS

Fig. 1 is a perspective view of an organ container;
Fig. 2 is a top view of the organ container;
Fig. 3 is a longitudinal sectional view of the organ container;
Fig. 4 is a longitudinal sectional view of the organ container;
Fig. 5 is a schematic diagram illustrating the organ container and an organ under no-load conditions;
Fig. 6 is a schematic diagram illustrating the organ container and the organ immediately before the organ is stored into the organ container;
Fig. 7 is a schematic diagram illustrating the organ container and the organ immediately after the organ is stored into the organ container;
Fig. 8 is a flowchart of a procedure of a transplant operation using the organ container;
Fig. 9 is a side view of an organ container according to a variation; and
Fig. 10 is a longitudinal sectional view of an organ container according to another variation.

### DESCRIPTION OF THE PREFERRED EMBODIMENTS

Hereinafter, an embodiment of the present invention will be described with reference to the drawings.

In the present application, "donors" and "recipients" may be humans, or may be non-human animals. That is, "organs" according to the present application may be human organs, or may be organs of non-human animals. The non-human animals may be rodents such as mice and rats, ungulates such as pigs, goats, and sheep, non-human primates such as chimpanzees, or other non-human mammals, or may also be nonmammalian animals.

### 1. Embodiment 1

### 1-1. Organ Container

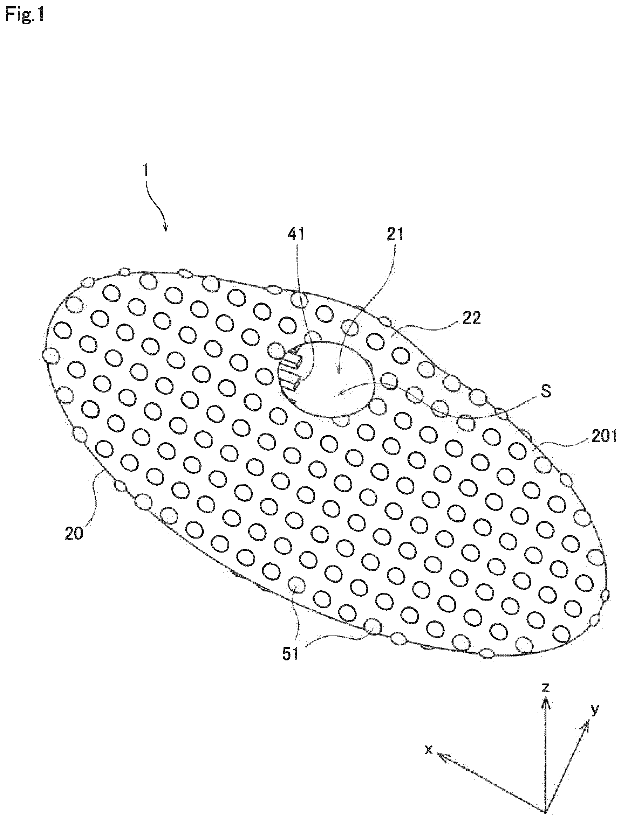

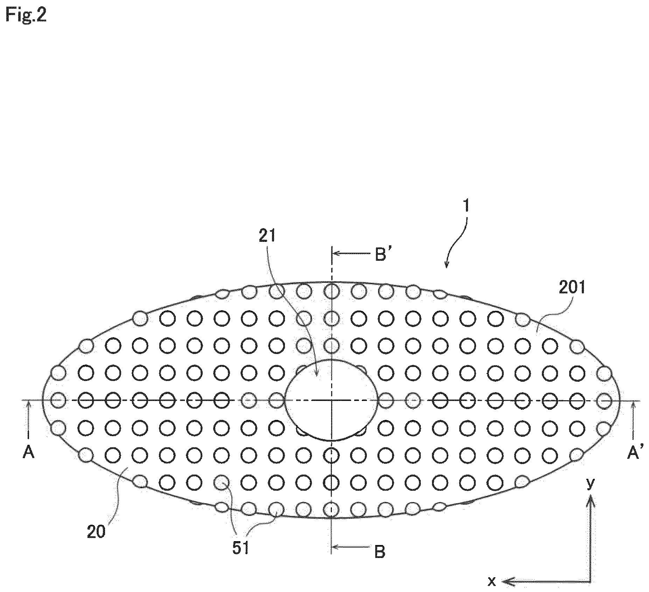

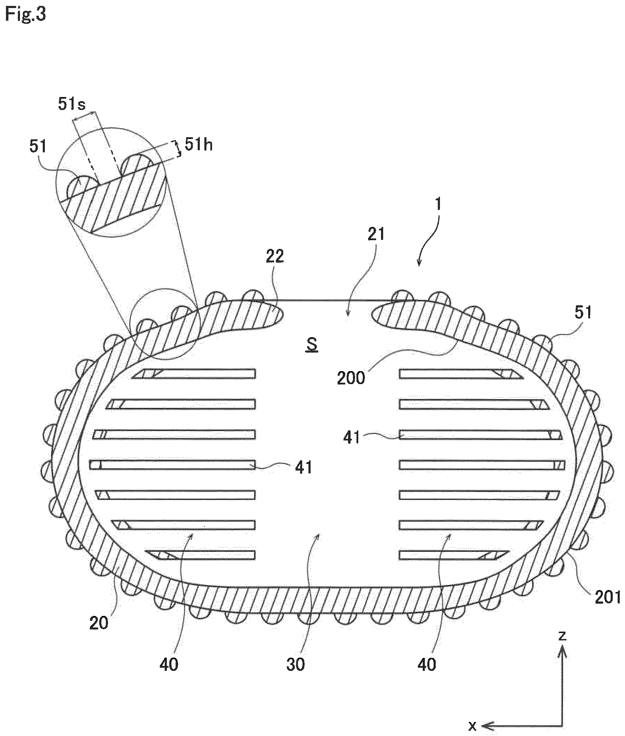

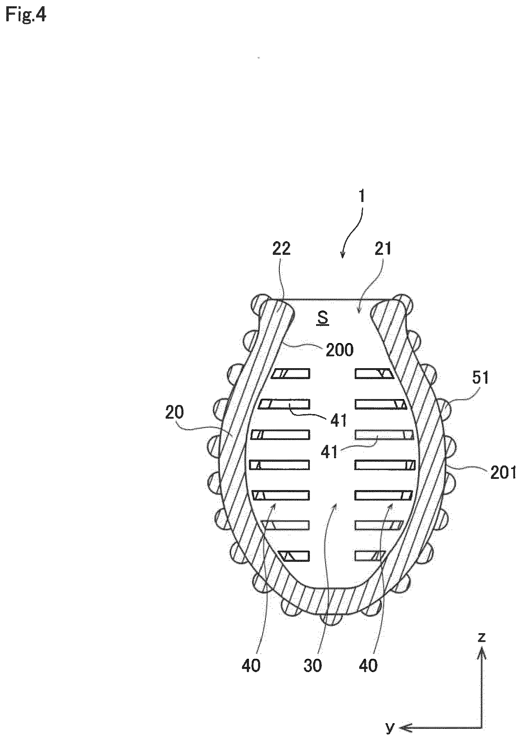

Fig. 1 is a perspective view of an organ container 1 according to Embodiment 1. Fig. 2 is a top view of the organ container 1. Figs. 3 and 4 are longitudinal sectional views of the organ container 1. Specifically, Fig. 3 is a longitudinal sectional view of the organ container 1 when viewed from a position A-A' indicated by arrows in Fig. 2. Fig. 4 is a longitudinal sectional view of the organ container 1 when viewed from a position B-B' indicated by arrows in Fig. 2. The organ container 1 is a container for temporarily storing an organ removed from a donor in a transplant operation of transplanting the organ into a recipient. That is, the organ container 1 is a medical appliance for use in organ transplant operations.

Examples of the organ to be stored in the organ container 1 include a kidney, a heart, and a lung. These organs have their blood vessels concentrated on one side of the organs, the blood vessels being to be anastomosed in transplant operations. The structure of the organ container 1 according to the present embodiment is in particular suitable for such organs. However, the organ container according to the present invention may also be configured to store other organs such as a liver.

In the following description, an up-down direction is defined such that the side of the organ container 1 on which an opening 21 described later is located is regarded as the upper side, and the bottom side of the organ container 1 opposite to the opening 21 is regarded as the lower side. Hereinafter, as illustrated in Fig. 1, the up-down direction is also referred to as a z direction, a direction along the long sides of the organ container 1 when viewed in the z direction is referred to as an x direction, and a direction along the short sides of the organ container 1 when viewed in the z direction is referred to as a y direction. This definition of the up-down direction does not intend to limit the orientation of the organ container 1 during use.

As illustrated in Fig. 1, the organ container 1 includes a contractible and expandable pouch-shaped body 20. The body 20 is made of a single seamless material. Alternatively, the body 20 may be formed in a pouch shape by suturing, bonding, or welding two or more materials. The body 20 has an opening 21 and a thick portion 22. The body 20 is capable of storing an organ that is inserted from the opening 21 into an inner space S of the body 20. The thick portion 22 entirely surrounds the opening 21.

The organ container 1 according to the present embodiment has a generally ellipsoidal shape as a whole. That is, the body 20 has a generally ellipsoidal shape. This organ container 1 is in particular configured to store a kidney as an organ. The organ container 1 as a whole is made in a generally ellipsoidal shape so that the body 20 has an inner surface 200 of a shape that can easily fit along the surface of a kidney. However, the shape of the organ container 1 is not limited thereto.

The body 20 is formed of a styrene elastomer, which is a thermal insulating super soft material. Specifically, the body 20 is formed of an oil bleeding elastomer. Alternatively, the body 20 may be formed of a thermoplastic elastomer, a urethane elastomer, or an oil bleeding silicone gel. The body 20 according to the present embodiment has a hardness of, for example, E10 to A10 according to a durometer hardness test compliant with Japanese Industrial Standards JIS K 6253-3:2012. The elongation rate of the body 20 is higher than or equal to 1000% at breakage. The oil bleeding elastomer serving as the material for the body 20 generally has a surface with tackiness (stickiness).

The body 20 formed of such a material can be easily stretched without breaking itself and the opening 20. The body 20 formed of such a material can also keep the temperature of the organ in the body 20 when the organ is stored in the body 20. Besides, it is possible to reduce the possibility that the body temperature of the recipient, the outside air temperature, or the heat generated from a variety of equipment used in the transplant operation may propagate to the organ. This suppresses a temperature rise in the organ and allows work such as a vascular anastomosis to be performed while the organ is kept at low temperatures. As a result, it is possible to reduce the possibility that the organ may get into a warm ischemic state and to reduce the occurrence of postoperative disorders. The body 20 formed of such a material can further protect the organ stored in the body 20 and reduce damage to the organ when some sort of impacts is applied to the organ.

The opening 21 is formed to insert an organ into the inner space S of the body 20. The opening 21 provides communication between the inner space S of the body 20 and the outer space. The opening 21 also plays a role as a connection port for connecting blood vessels or other parts connected to the organ to the outside while the organ is stored in the body 20. In the present embodiment, the opening 21 has a generally elliptical shape that is slightly long in the x direction. Under no-load conditions, a maximum width of the opening 21 (the length of the opening 21 in the x direction) is shorter than a maximum width of the body 20 (the length of the body 20 in the x direction).

The thick portion 22 is a portion that has a greater thickness in part than surrounding portions. The styrene elastomer with a greater thickness, serving as the material for the body 20, has a higher capability to contract in a direction of returning to its original shape against loads applied in the direction of expansion. Thus, the thick portion 22 that entirely surrounds the opening 21 increases an elastically deformable amount of the organ container around the opening 21 and further improves strength. That is, it is possible to reduce the possibility of plastic deformation or breakage of the organ container around the opening 21 when the opening 21 is expanded.

When the organ container 1 that stores an organ is placed in the body cavity of a recipient for work such as vascular anastomosis, a low-temperature preservation solution is poured into the interstices between the organ and the inner surface 200 of the body 20, using a syringe or a pipette. In the present embodiment, when the organ is stored in the organ container 1, the thick portion 22 comes in intimate contact with the organ to thereby suppress a protrusion of the organ through the opening 21 and an outflow of the liquid held in the interstices between the organ and the inner surface 200 of the body 20 through the opening 21. This further suppresses a temperature rise in the organ and further reduces the possibility that the organ may get into a warm ischemic state.

As illustrated in Figs. 1 to 4, the body 20 has a plurality of projections 51 on the entire outer surface 201 (exterior surface). These projections 51 form an uneven shape of the entire outer surface 201 of the body 20. This facilitates the surgeon's handling of the organ container 1 and improves workability during operation or during transport of the organ container 1. However, it is not an absolute necessity that the entire outer surface 201 of the body 20 has an uneven shape.

Each of the projections 51 according to the present embodiment has a hemispherical shape that projects toward the outer space of the organ container 1. This reduces the area that the surgeon comes in contact with the organ container 1 when handling the organ container 1. Accordingly, the surgeon can easily handle the organ container 1 even if the body 20 has tackiness. Besides, the projections 51 are shaped with no sharp points. Thus, even if the projections 51 come in contact with the organ to be transplanted or other surrounding organs, damage to these organs is suppressed. Note that the shape of the projections 51 is not limited to the hemispherical shape.

As illustrated in Fig. 3, each projection 51 according to the present embodiment has a height 51h less than or equal to 2 mm. An interval 51s between each pair of adjacent projections 51 is greater than or equal to 4 mm and less than or equal to 5 mm. On the entire outer surface 201 of the body 20, a large number of projections 51 are arranged at approximately regular intervals. In this way, a large number of fine projections 51 are formed with no large spaces therebetween on the outer surface 201 of the body 20. This further reduces the area that the surgeon touches the body 20 when handling the organ container 1. Accordingly, the surgeon can more easily handle the organ container 1 even if the body 20 has tackiness. Note that the height 51h of each projection 51 may be higher than 2 mm, and the interval 51s between each pair of adjacent projections may be less than 4 mm or greater than 5 mm. As another alternative, a large number of projections 51 may be formed at irregular intervals on the outer surface 201 of the body 20.

The inner surface 200 of the body 20 includes first regions 30 having smooth curved surfaces and second regions 40 having uneven shapes. That is, the body 20 according to the present invention has the inner surface 200 and the outer surface 201 each having an uneven shape. As illustrated in Figs. 3 and 4, in the present embodiment, the first regions 30 are located in the bottom of the inner surface 200 that faces the opening 21, in both end portions of the inner surface 200 in the x direction, and in both end portions of the inner surface 200 in the y direction. The second regions 40 are located in the other portions.

The second regions 40 each have a plurality of linear projections 41. These projections 41 form the uneven shape. Each of the projections 41 projects toward the inner space S of the pouch-shaped body 20. Moreover, each of the projections 41 according to the present embodiment is generally parallel to the edge of the opening 21. Alternatively, each projection 41 may further have a tapered surface at the corners.

The inner surface 200 of the body 20 with such a structure, i.e., the uneven shapes of the second regions 40, reduces the possibility that the organ stored in the body 20 may slip off or detached from the body 20 during transplantation of the organ into the recipient. The organ is held in the body 20 without being damaged by the uneven shapes or having traces of the uneven shapes. As a result, it is possible to carry out work such as vascular anastomosis while stably holding the organ in the body 20 and keeping the organ at low temperatures. This reduces the possibility that the organ may get into a warm ischemic state and suppresses the occurrence of postoperative disorders.

In the present embodiment, the uneven shape of the inner surface 200 of the body 20 forms a plurality of interstices between the organ and the inner surface 200 of the body 20 when the organ is stored in the body 20. Each of the interstices extends in the horizontal direction. As described above, when the organ container 1 that stores the organ is placed in the body cavity of the recipient for work such as vascular anastomosis, a low-temperature preservation solution is poured into the interstices between the organ and the inner surface 200 of the body 20, using a syringe or a pipette. In the present embodiment, the preservation solution can be held in each of the aforementioned interstices. This further suppresses a temperature rise in the organ.

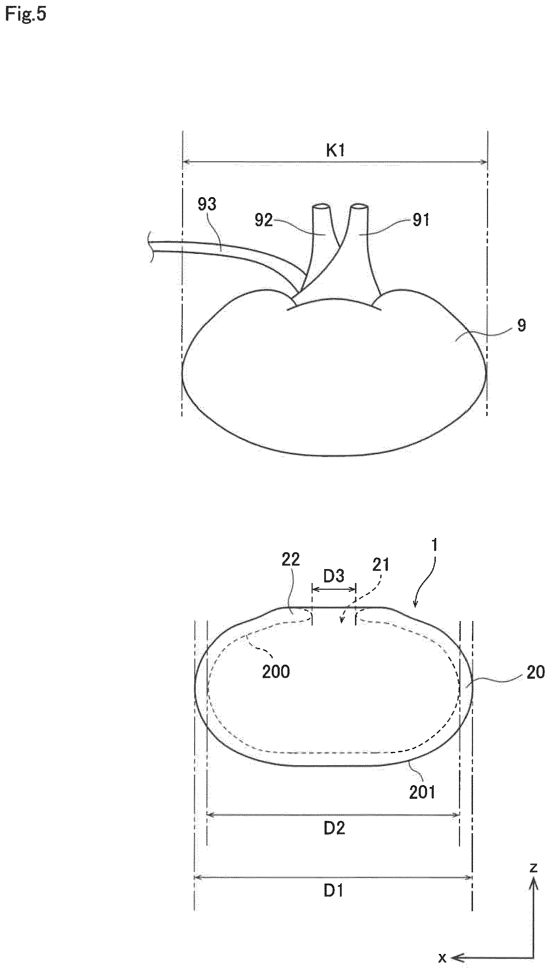

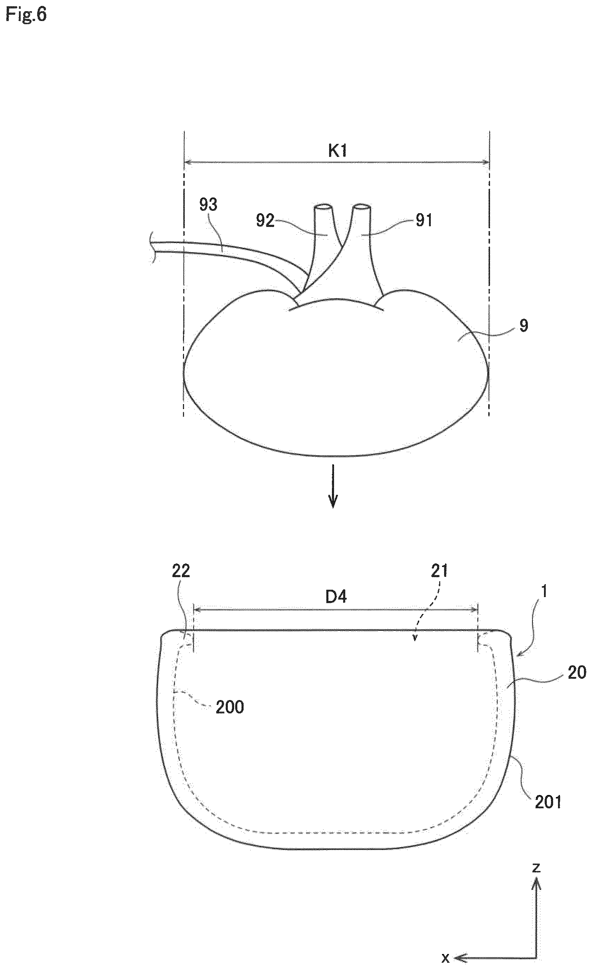

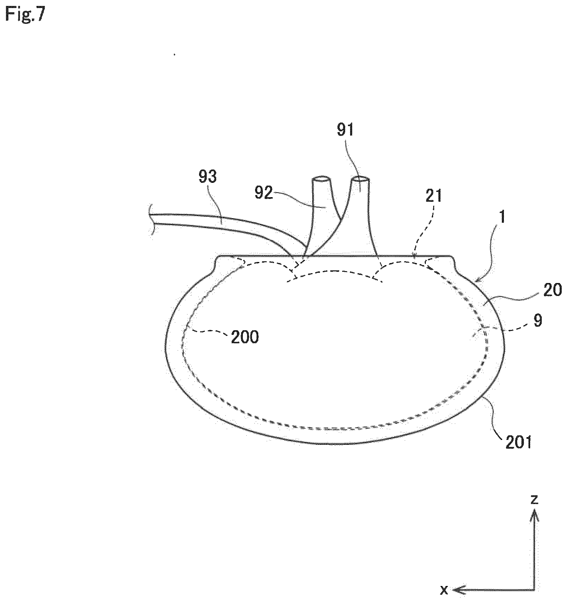

Figs. 5 to 7 are schematic diagrams illustrating how a kidney 9, which is one example of the organ, is stored into the organ container 1. Specifically, Fig. 5 is a diagram illustrating the organ container 1 and the kidney 9 juxtaposed to each other under no-load conditions before the kidney 9 is stored into the organ container 1. Fig. 6 is a diagram illustrating the kidney 9 and the organ container 1 juxtaposed to each other, with the opening 21 being stretched in order to store the kidney 9, immediately before the kidney 9 is stored into the organ container 1. Fig. 7 is a diagram illustrating the kidney 9 stored in the organ container 1. Note that the uneven shape of the outer surface 201 of the body 20 is not illustrated in the organ container 1 illustrated in Figs. 5 to 7.

As illustrated in Fig. 5, under no-load conditions, a maximum width of the body 20 of the organ container 1, i.e., a length D1 in the x direction, is smaller than a maximum width of the kidney 9, i.e., a length K1. That is, under no-load conditions, a maximum width of the inner surface 200 of the body 20, i.e., a length D2, is smaller than the length K1, which is the maximum width of the kidney 9. Thus, under no-load conditions, a maximum width of the opening 21, i.e., a length D3, is understandably smaller than the length K1, which is the maximum width of the kidney 9.

The opening 21 is stretchable until the maximum width of the opening 21 becomes greater than the length D1, which is the maximum width of the body 20 under no-load conditions. This facilitates the storing of the kidney 9 into the body 20. In the illustration in Fig. 6, the opening 21 is stretched until the maximum width of the opening 21 becomes a length D4 that is greater than the length D1, which is the maximum width of the body 20 under no-load conditions. In this way, the surgeon stretches the opening 21 to store the kidney 9 into the body 20 through the opening 21.

The organ container 1 according to the present embodiment is stretchable until the maximum width of the opening 21 becomes greater than the length K1, which is the maximum width of the kidney 9. This further facilitates the storing of the kidney 9 into the body 20. Even if the organ container cannot be stretched until the maximum width of the opening 21 becomes greater than the length K1, the organ container can be used as long as it is stretched until the maximum width of the inner surface 200 of the body 20 becomes greater than the length K1. This enables the surgeon to store the kidney 9 into the body 20. As another alternative, the surgeon may once turn the organ container 1 inside out to store the kidney 9.

As described above, the body 20 according to the present invention has a plurality of projections 51 on the outer surface 201. These projections 51 form the uneven shape of the outer surface 201 of the body 20. This facilitates the surgeon's handling of the organ container 1 when the surgeon stretches the opening 21 to store the kidney 9 into the body 20. As a result, workability improves.

When the kidney 9 has been stored in the body 20 as illustrated in Fig. 7, the entire inner surface 200 of the body 20 including the surroundings of the opening 21 comes along the outer surface of the kidney 9. As described above, the inner surface 200 of the body 20 under no-load conditions is smaller than the outer surface of the kidney 9. Thus, when the kidney 9 is stored in the organ container 1, the inner surface 200 of the body 20 comes along the outer surface of the kidney 9, and the projections 41 on the inner surface 200 of the body 20 come in intimate contact with the outer surface of the kidney 9. Accordingly, the kidney 9 is appropriately held without moving inside the body 20. As a result, damage to the kidney 9 is reduced. Since most part of the outer surface of the kidney 9 is covered with the organ container 1 having insulation effectiveness, it is easy to maintain the temperature of the kidney 9 and it is possible to efficiently suppress a temperature rise in the kidney 9.

Moreover, when the kidney 9 is stored in the body 20, the projections 41 come in contact with the outer surface of the kidney 9 and thereby form a plurality of interstices between the inner surface 200 of the body 20 and the outer surface of the kidney 9. Each of these interstices extends in the horizontal direction. Thus, the aforementioned preservation solution for cooling can also be held in each of these interstices.

Here, if it is assumed that most part of the inner surface 200 of the body 20 forms the second regions 40 having uneven shapes, the volume of the preservation solution that can be held in the interstices between the inner surface 200 and the kidney 9 will increase. However, when the kidney 9 is stored into the body 20, the contractile force of the body 20 causes the inner surface 200 of the body 20 to come into intimate contact with the outer surface of the kidney 9. Thus, depending on the balance of shapes between the kidney 9 and the body 20, some portions of the inner surface 200 may be pressed harder against the kidney 9. If such portions of the inner surface 200 have uneven shapes, traces of the uneven shapes may remain on the outer surface of the kidney 9.

In view of this, in the organ container 1, regions on which traces are likely to remain are made as smooth first regions 30 with no unevenness. In the case where the kidney 9 is stored in the body 20 having a general ellipsoidal shape such as the organ container 1, the pressure of the inner surface 200 against the kidney 9 is more likely to be applied in the major axis direction of the ellipsoidal shape, i.e., in the x direction. Therefore, in the present embodiment, the first regions 30 are located in both end portions of the inner surface 200 in the x direction as illustrated in Figs. 3 and 4. In addition to this, the first regions 30 are also located in both end portions of the inner surface 200 in the y direction to which the pressure of the inner surface 200 to the kidney 9 is relatively easily applied. In this way, it is possible to suppress the remaining of traces by making the regions of the inner surface 200 on which traces of the uneven shapes are likely to remain as the smooth first regions 30 with no unevenness.

In the present embodiment, a portion of the inner surface 200 that is located in the vicinity of the bottom is also made as the first region 30 with no unevenness. This is because there is no particular need to provide an uneven shape in the vicinity of the bottom since the preservation solution is naturally accumulated in the bottom by gravity.

### 1-2. Procedure of Organ Transplantation

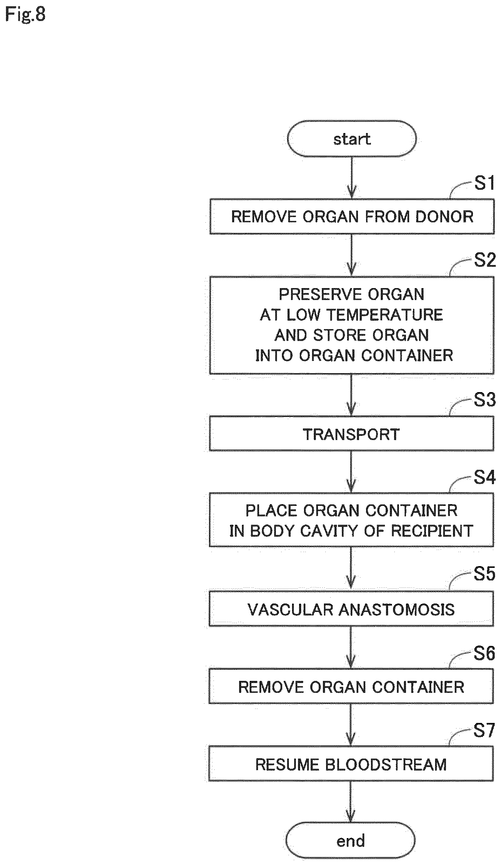

Next, a procedure of a transplant operation of transplanting an organ removed from a donor into a recipient, using the organ container 1 described above, will be described. Fig. 8 is a flowchart of the procedure for the transplant operation using the organ container 1. The following description is given of the case where the kidney 9 is to be transplanted using the organ container 1.

In the transplant operation of a kidney, first, the kidney 9 is removed from a donor (step S1). Specifically, blood vessels 91 and 92 and an ureter 93 that extend from the kidney 9 of the donor (see Figs. 5 to 7) are cut, and the kidney 9 is taken out of the body cavity of the donor.

The removed kidney 9 is preserved while being immersed in a low-temperature preservation solution. The kidney 9 is also stored into the organ container 1 (step S2). The preservation solution may, for example, be saline that is kept at 4°C. As described above, if the organ is left at ordinary temperatures and the blood flowing from and to the organ is stopped, i.e., if the organ gets into a so-called warm ischemic state, the organ generally becomes easy to deteriorate due to metabolism in the organ. Thus, in step S2, the kidney 9 is preserved at a temperature lower than the ordinary temperatures in order to suppress deterioration of the kidney 9.

Alternatively, in step S2, tubes may be connected to the blood vessels 91 and 92 of the kidney 9, and the kidney 9 may be preserved while being perfused with a preservation solution via the tubes. Note that the perfusion using the preservation solution may continue until step S4 described later.

The timing when the kidney 9 is stored into the organ container 1 may be before the kidney 9 is immersed in the preservation solution, or may be after the kidney 9 is immersed in the preservation solution for a while and cooled enough. When the kidney 9 is stored into the organ container 1, the opening 21 of the organ container 1 is opened, and the kidney 9 is inserted through the opening 21 into the body 20 as illustrated in Fig. 6. Accordingly, the kidney 9 is held inside the pouch-shaped body 20 as illustrated in Fig. 7. Note that the blood vessels 91 and 92 and the ureter 93 of the kidney 9 that are to be anastomosed to the blood vessels of the recipient in step S5 described later are left exposed to the outside through the opening 21.

Moreover, a low-temperature preservation solution is poured into the interstices between the kidney 9 and the inner surface 200 of the body 20, using a syringe or a pipette. The poured preservation solution is held between the kidney 9 and the inner surface 200 of the body 20. At this time, the thick portion 22 of the body 20 comes into intimate contact with the kidney 9 and thereby suppresses a protrusion of the kidney 9 from the opening 21 and an outflow of the preservation solution through the opening 21. Accordingly, the kidney 9 is immersed again in the low-temperature preservation solution and maintained in a low-temperature preservation condition while being embraced by the organ container 1.

The kidney 9 held by the organ container 1 is transported from the donor side to the recipient side while being immersed in the low-temperature preservation solution (step S3). The kidney 9 transported to the recipient side is immersed in a low-temperature preservation solution until immediately before the transplantation, while continuously being held in the organ container 1.

Then, the abdomen of the recipient is opened, and the organ container 1 that stores the kidney 9 is placed in the body cavity of the recipient (step S4). Then, the blood vessels of the recipient are anastomosed to the blood vessels 91 and 92 of the kidney 9 exposed to the outside through the opening 21 of the organ container 1 (step S5). In the case where the organ to be transplanted is the kidney 9, the ureter 93 is also connected to the urinary bladder.

During the work in steps S2 to S5, blood does not flow inside the kidney 9. During the work in steps S4 and S5, the kidney 9 stored in the organ container 1 is placed in the body cavity of the recipient. At this time, since the kidney 9 is stored in the organ container 1 with most part of its outer surface covered with the body 20 and the organ container 1 has a thermal insulating function, the kidney 9 is less likely to be affected by the body temperature of the recipient, the outside air temperature, or the heat generated from a variety of equipment used in the transplant operation. This allows the vascular anastomosis to be carried out with a reduced temperature rise in the kidney 9. Accordingly, it is possible to reduce the possibility that the kidney 9 may get into a warm ischemic state and may become progressively deteriorated due to metabolism. As a result, it is possible to suppress the occurrence of postoperative disorders.

In steps S4 and S5, the low-temperature preservation solution is poured at regular time intervals into the interstices between the kidney 9 and the inner surface 200 of the body 20, using a syringe or a pipette. For example, the preservation solution is poured every few minutes. The preservation solution already existing in the body 20 is collected using a drain and discharged to the outside of the body of the recipient. Note that the preservation solution already existing in the body 20 refers to a slightly warmed preservation solution. This further suppresses a temperature rise in the kidney 9 stored in the body 20.

Thereafter, the opening 21 of the organ container 1 is opened, and the kidney 9 that has undergone the vascular anastomosis is taken out of the organ container 1. Then, the organ container 1 is removed from the body cavity of the recipient (step S6). Thereafter, the bloodstream from the anastomosed blood vessels of the recipient to the kidney 9 or vice versa is resumed (step S7).

When the kidney 9 is stored in the organ container 1, the entire inner surface 200 of the body 20 covers the surface of the kidney 9 along the outer surface of the kidney 9. Thus, the end portions or other portions of the organ container 1 will not expand greatly around the kidney 9. Accordingly, the organ container 1 is less likely to hinder work during operation.

Besides, the organ container 1 is formed of a super soft material. Thus, even if some sort of impacts is applied to the organ during transport or operation, it is possible to protect the kidney 9 stored in the body 20 and to absorb the impacts applied to the kidney 9. This reduces damage to the kidney 9.

As described above, the body 20 according to the present invention has a plurality of projections 51 on the outer surface 201. These projections 51 form the uneven shape of the outer surface 201 of the body 20. This facilitates the surgeon's handling of the organ container 1 during transport or operation, in particular when the kidney 9 is inserted into the body 20 or when the kidney 9 is taken out of the body 20. As a result, it is possible to improve workability during the organ transplantation and to reduce the occurrence of accidents such as an accidental drop of the organ container 1 by the surgeon.

### 2. Variations

While one principal embodiment of the present invention has been described thus far, the present invention is not intended to be limited to the above-described embodiment.

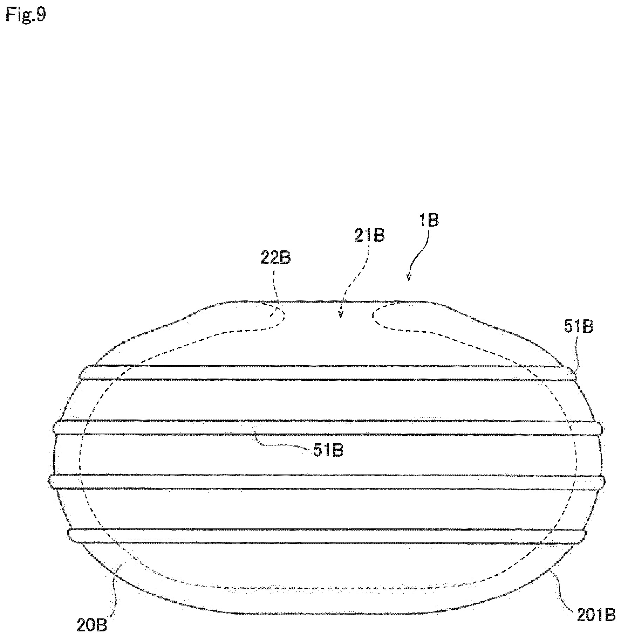

Fig. 9 is a side view of an organ container 1B according to a variation. As in Embodiment 1, the organ container 1B includes a contractible and expandable pouch-shaped body 20B. The body 20B has an opening 21B and a thick portion 22B. The body 20B is capable of storing an organ that is inserted from the opening 21B into the body 20B. The thick portion 22B entirely surround the opening 21B.

As illustrated in Fig. 9, the body 20B has a plurality of linear projections 51B on the outer surface 201B. Each of the linear projections 51B projects toward the outer space of the organ container 1B. Each of the projections 51B also extends approximately parallel to the edge of the opening 21B. According to this variation, the linear projections 51B form an uneven shape of the outer surface 201B of the body 20B. This facilitates the surgeon's handling of the organ container 1B and thereby improves workability.

Alternatively, each projection 51B may further have a tapered surface at the corners. Each of the linear projections 51B may extend in a direction approximately perpendicular to the edge of the opening 21B on the outer surface 201B of the body 20B. Moreover, each projection may have a linear shape as in this variation, may have a hemispherical shape as in Embodiment 1 described above, or may have a polygonal shape such as a cubic shape or a rectangular parallelepiped shape. The projections may also be provided in a lattice form or in a spotty form on the outer surface of the body.

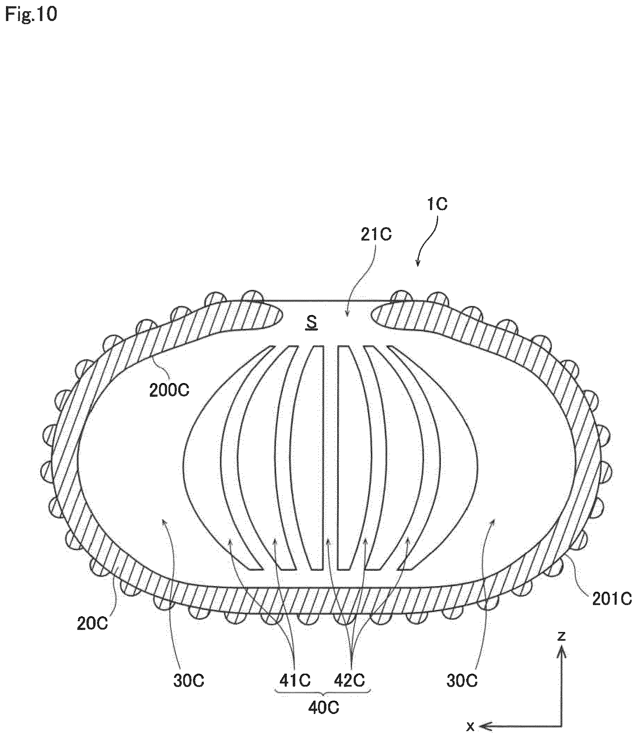

Fig. 10 is a longitudinal sectional view of an organ container 1C according to another variation. A body 20C of the organ container 1C according to this variation has an inner surface 200C that includes first regions 30C having smooth curved surfaces and second regions 40C having uneven shapes. According to this variation, the first regions 30C are located in the bottom of the inner surface 200C that faces the opening 21C and in both end portions of the inner surface 200C in the x direction. The second regions 40C are located in the other portions.

The second regions 40C include projections 41C and recesses 42C. Each of the projections 41C and the recesses 42C extends in the z direction. The projections 41C project toward the inner space S of the body 20C more than the adjacent recesses 42C. Thus, when an organ is stored in the organ container 1C, each of the projections 41C comes in intimate contact with the outer surface of the organ. Accordingly, the recesses 42C form a plurality of interstices between the inner surface 200C of the body 20C and the outer surface of the organ. This allows a preservation solution for cooling to be held in these interstices. In particular, when the recesses 42C extend in the z direction as in this variation, the preservation solution for cooling that is poured from the opening 21C will easily reach the bottom along the recesses 42C. That is, the preservation solution for cooling held between the inner surface 200C and the organ can spread easily over the entire inner surface 200C. This improves the efficiency of suppressing a temperature rise in the organ stored in the body 20C.

While the projections 41C according to this variation have a structure that projects toward the inner space S of the body 20C, the recesses 42C may have, instead of or in addition to the above structure, a structure that is recessed more outwardly. Specifically, when a plane that is virtually extended from the first regions 30C with smooth curved surfaces is assumed to be a reference plane, each of the recesses 42C may be recessed outward of the reference plane. Each of the projections 41C may be located in the reference plane. This structure reduces the possibility that the projections 41C may dig into the organ when the organ is stored in the organ container 1C, and thereby further suppresses the remaining of traces. As another alternative, the outward dents of the recesses 42C may directly form the uneven shape of the outer surface 201C of the body 20C.

In the embodiment and variations described above, the inner and outer surfaces of the body each have one type of uneven shape. However, the inner and outer surfaces of the body each may have a plurality of types of uneven shapes. Moreover, the inner and outer surfaces of the body each may have one or a plurality of types of uneven shapes at regular intervals or at irregular intervals.

A detailed structure of the organ container does not necessarily have to completely match with the structure illustrated in each drawing of the present application. The scope of the invention is defined by the appended claims.

## Claims

1. An organ container (1) for storing an organ (9), comprising:
a pouch-shaped body (20) having an opening (21) and capable of storing an organ (9) that is inserted from said opening (21) into an inner space (S),
wherein said body (20) is formed of a styrene elastomer,
**characterized in that** said body (20) has a plurality of linear projections (41) on an inner surface (200) of said body (20), said plurality of linear projections (41) forming an uneven shape of said inner surface (200), and
wherein said body (20) has a plurality of projections (51) on an outer surface (201) of said body (20), said plurality of projections (51) forming an uneven shape of said outer surface (201).

2. The organ container (1) according to claim 1, wherein
said body (20) is formed of an oil bleeding elastomer, and
wherein said body (20) has a hardness of E10 to A10 according to a durometer hardness test compliant with Japanese Industrial Standards JIS K 6253-3:2012.

3. The organ container (1) according to claim 1 or 2, wherein
said outer surface (201) of said body (20) as a whole has said uneven shape.

4. The organ container (1) according to any one of claims 1 to 3, wherein
each of said plurality of projections (51) on the outer surface has a hemispherical shape that projects toward an outer space of the organ container (1).

5. The organ container (1) according to any one of claims 1 to 4, wherein
said projections (51) on the outer surface are spaced at an interval greater than or equal to 4 mm and less than or equal to 5 mm.

6. The organ container (1) according to any one of claims 1 to 5, wherein
said projections (51) on the outer surface have a height less than or equal to 2 mm.

7. The organ container (1B) according to any one of claims 1 to 3, wherein
each of said plurality of projections (51B) on the outer surface is a linear projection (51B) that projects toward an outer space of the organ container (1B), said plurality of linear projections (51B) on the outer surface extending in parallel with an edge of said opening (21B).

8. The organ container (1) according to any one of claims 1 to 7, wherein
a maximum width of said opening (21) under no-load conditions is shorter than a maximum width of said body (20), and
said opening (21) is stretchable until the maximum width of said opening (21) becomes greater than the maximum width of said body (20) under no-load conditions.

## Patentansprüche

1. Organbehälter (1) zum Aufbewahren eines Organs (9), aufweisend:
einen beutelförmigen Körper (20), der eine Öffnung (21) aufweist und ein Organ (9) aufnehmen kann, das durch die Öffnung (21) in einen Innenraum (S) eingeführt wird,
wobei der Körper (20) aus einem Styrol-Elastomer gebildet ist,
**dadurch gekennzeichnet, dass** der Körper (20) eine Vielzahl von linearen Vorsprüngen (41) auf einer Innenfläche (200) des Körpers (20) aufweist, wobei die Vielzahl von linearen Vorsprüngen (41) eine unebene Form der Innenfläche (200) bildet, und
wobei der Körper (20) eine Vielzahl von Vorsprüngen (51) auf einer Außenfläche (201) des Körpers (20) aufweist, wobei die Vielzahl von Vorsprüngen (51) eine unebene Form der Außenfläche (201) bildet.

2. Organbehälter (1) gemäß Anspruch 1, wobei
der Körper (20) aus einem ölabsorbierenden Elastomer gebildet ist, und
wobei der Körper (20) eine Härte von E10 bis A10 gemäß einem Durometer-Härtetest in Übereinstimmung mit den japanischen Industrienormen JIS K 6253-3:2012 aufweist.

3. Organbehälter (1) gemäß Anspruch 1 oder 2, wobei
die Außenfläche (201) des Körpers (20) als Ganzes die unebene Form aufweist.

4. Organbehälter (1) gemäß einem der Ansprüche 1 bis 3, wobei
jeder der Vielzahl von Vorsprüngen (51) auf der Außenfläche eine halbkugelförmige Form hat, die in Richtung einer äußeren Umgebung des Organbehälters (1) vorsteht.

5. Organbehälter (1) gemäß einem der Ansprüche 1 bis 4, wobei
die Vorsprünge (51) auf der Außenfläche in einem Abstand von mehr als oder gleich 4 mm und weniger als oder gleich 5 mm angeordnet sind.

6. Organbehälter (1) gemäß einem der Ansprüche 1 bis 5, wobei
die Vorsprünge (51) auf der Außenfläche eine Höhe von 2 mm oder weniger haben.

7. Organbehälter (1B) gemäß einem der Ansprüche 1 bis 3, wobei
jeder der Vielzahöl von Vorsrpüngen (51B) auf der Außenfläche ein linearer Vorsprung (51B) ist, der in Richtung einer äußeren Umgebung des Organbehälters (1B) vorsteht, wobei sich die mehreren linearen Vorsprünge (51B) auf der Außenfläche parallel zu einem Rand der Öffnung (21B) erstrecken.

8. Organbehälter (1) gemäß einem der Ansprüche 1 bis 7, wobei
eine maximale Breite der Öffnung (21) im unbelasteten Zustand kürzer ist als eine maximale Breite des Körpers (20), und
die Öffnung (21) dehnbar ist, bis die maximale Breite der Öffnung (21) größer wird als die maximale Breite des Körpers (20) im unbelasteten Zustand.

## Revendications

1. Récipient (1) pour organe destiné à stocker un organe (9), comprenant :
un corps en forme de poche (20) comportant une ouverture (21) et capable de stocker un organe (9) qui est inséré depuis ladite ouverture (21) dans un espace intérieur (S),
dans lequel ledit corps (20) est formé d'un élastomère de styrène,
**caractérisé en ce que** ledit corps (20) comporte une pluralité de saillies linéaires (41) sur une surface intérieure (200) dudit corps (20), ladite pluralité de saillies linéaires (41) formant une forme irrégulière de ladite surface intérieure (200), et
dans lequel ledit corps (20) comporte une pluralité de saillies (51) sur une surface extérieure (201) dudit corps (20), ladite pluralité de saillies (51) formant une forme irrégulière de ladite surface extérieure (201).

2. Récipient (1) pour organe selon la revendication 1, dans lequel
ledit corps (20) est formé d'un élastomère exsudant de l'huile, et
dans lequel ledit corps (20) a une dureté de E10 à A10 mesurée conformément à un essai de dureté au duromètre conforme aux normes industrielles japonaises JIS K 6253-3:2012.

3. Récipient (1) pour organe selon la revendication 1 ou 2, dans lequel
ladite surface extérieure (201) dudit corps (20) dans son ensemble présente ladite forme irrégulière.

4. Récipient (1) pour organe selon l'une quelconque des revendications 1 à 3, dans lequel
chacune de ladite pluralité de saillies (51) sur la surface extérieure présente une forme hémisphérique qui fait saillie vers un espace extérieur du récipient (1) pour organe.

5. Récipient (1) pour organe selon l'une quelconque des revendications 1 à 4, dans lequel
lesdites saillies (51) sur la surface extérieure sont espacées d'un intervalle supérieur ou égal à 4 mm et inférieur ou égal à 5 mm.

6. Récipient (1) pour organe selon l'une quelconque des revendications 1 à 5, dans lequel
lesdites saillies (51) sur la surface extérieure ont une hauteur inférieure ou égale à 2 mm.

7. Récipient (1B) pour organe selon l'une quelconque des revendications 1 à 3, dans lequel
chacune de ladite pluralité de saillies (51B) sur la surface extérieure est une saillie linéaire (51B) qui fait saillie vers un espace extérieur du récipient (1B) pour organe, ladite pluralité de saillies linéaires (51B) sur la surface extérieure s'étendant parallèlement à un bord de ladite ouverture (21B).

8. Récipient (1) pour organe selon l'une quelconque des revendications 1 à 7, dans lequel
une largeur maximale de ladite ouverture (21) dans des conditions sans charge est inférieure à une largeur maximale dudit corps (20), et
ladite ouverture (21) est extensible jusqu'à ce que la largeur maximale de ladite ouverture (21) devienne supérieure à la largeur maximale dudit corps (20) dans des conditions sans charge.
